(19) Europäisches Patentamt
European Patent Office
Office européen des brevets

(11) **EP 3 803 306 B1**

(12) **EUROPEAN PATENT SPECIFICATION**

(45) Date of publication and mention
of the grant of the patent:
**03.07.2024 Bulletin 2024/27**

(21) Application number: **19806861.1**

(22) Date of filing: **23.05.2019**

(51) International Patent Classification (IPC):
*G01L 5/10* $^{(2020.01)}$     *G01L 23/12* $^{(2006.01)}$
*G01F 23/00* $^{(2022.01)}$     *G01L 5/103* $^{(2020.01)}$
*G01D 5/20* $^{(2006.01)}$     *G01L 1/14* $^{(2006.01)}$
*G01L 5/00* $^{(2006.01)}$

(52) Cooperative Patent Classification (CPC):
**G01L 1/14; G01F 23/0023; G01L 5/0061;
G01L 5/103;** G01D 5/2013

(86) International application number:
**PCT/US2019/033655**

(87) International publication number:
**WO 2019/226847 (28.11.2019 Gazette 2019/48)**

(54) **DYNAMIC INDUCTANCE FORCE TRANSDUCER**

DYNAMISCHER INDUKTIVITÄTSKRAFTAUFNEHMER

TRANSDUCTEUR DE FORCE À INDUCTANCE DYNAMIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.05.2018 US 201815988703**

(43) Date of publication of application:
**14.04.2021 Bulletin 2021/15**

(73) Proprietor: **Honeywell International Inc.
Morris Plains, NJ 07950 (US)**

(72) Inventor: **SAI, Bin
Charlotte, NC 28202 (US)**

(74) Representative: **Houghton, Mark Phillip
Patent Outsourcing Limited
1 King Street
Bakewell, Derbyshire DE45 1DZ (GB)**

(56) References cited:
**GB-A- 1 015 118        SU-A1- 433 351
US-A- 3 300 161        US-A- 3 782 188
US-A- 4 271 407        US-A- 5 144 988
US-A- 5 563 355        US-A1- 2007 044 567**

• **DAN MIHAI STEFANESCU: "Inductive Force
Transducers", 1 January 2011 (2011-01-01),
HANDBOOK OF FORCE TRANSDUCERS,
SPRINGER, DE, PAGE(S) 73 - 86, XP009186441,
ISBN: 978-3-642-18296-9 * Section 4.1; figures
4.3b,4.4 * * * * ***

## Description

Disclosed embodiments relate to electro-mechanical force transducers.

BACKGROUND

Force transducers have widely been used in many different applications. Known force transducers include tension force sensors, strain gauge load cells which can be based on different principles such as a piezoelectric crystal, hydraulic, pneumatic, Linear Variable Differential Transformer (LVDT), capacitive, tuning fork, or a vibration wire. With such a large variety of force sensors, the measuring ranges covered are generally from 0.1 N to 100,000 N. However, the low end force measuring range from about 0.01 N to 0.5 N still remains a challenge to provide. A few highly sensitive force transducers can measure such small magnitude forces in this low force range, but are expensive and not sufficiently durable for industrial applications such as for servo gauging when measuring the stratified density distribution of a fluid using a submerged displacer placed in a container (e.g., an oil tank).

Dan Mihai Stefanescu: "Inductive force transducers", 1 January 2011, Handbook of force transcucers, Springer, DE, Page(s) 73-86, XP009186442 ISBN978-3-642-18296-9 discusses a range of inductive force transducers.

US3782188A discloses an apparatus for measuring the displacement of an object which is acted upon by a force, e.g., to measure muscular contractions, or to measure thoracic motion during breathing, or to measure tooth mobility. The apparatus comprises a first measuring rod which engages the object to be measured, and a second measuring rod engaging a reference point which is stationary relative to the object being measured. A spring, which may be replaceable to select appropriate spring characteristics, is disposed between one side of a housing and the first measuring rod; and an electrical sensing device is provided to measure forces which act upon the spring. A second electrical sensing device, associated with both the first and second measuring rods, is provided to measure relative motion between the first and second measuring rods. The two rods are mounted parallel to one another, and a third measuring rod, mounted parallel to the first and second rods and placed on the side of said first rod opposite to said second rod, may also be provided, and associated with a third electrical sensing device associated with the first and third measuring rods, to provide a further measure of relative motion between the first and third measuring rods.

GB1015118A discloses an apparatus for indicating the level of a liquid in a tank a float resting on liquid, is attached by a perforated tape to a sprocket driven by a motor and the liquid level is indicated by a pointer driven by a jockey pulley or a pointer also driven by the jockey pulley through gears. A coupling, driven by the pulley drives a transmitter for remote indication. A further jockey pulley, loaded by a spring, is connected to an armature movable with respect to a core having differentially wound coils, and the arrangement is such that as the tape is tightened or slackened as the float is moved by a change in liquid level the armature is moved to upset the balance in coils, which effect the passage of a current through an amplifier to drive the motor in a clock or anti-clockwise direction which the tape is returned to its normal tautness and the armature is returned to the balancing position between the coils.

SUMMARY

The present invention in its various aspects is as set out in the appended claims. This Summary is provided to introduce a brief selection of disclosed concepts in a simplified form that are further described below in the Detailed Description including the drawings provided. This Summary is not intended to limit the claimed subject matter's scope.

This Disclosure recognizes there is an unmet need for a durable, relatively low cost, and high sensitivity electro-mechanical force transducer suitable for measuring the low end of the force measuring range being about 0.01 N to 0.5 N, which may be under harsh industrial conditions. This unmet need is met by the disclosed dynamic inductance force transducers.

Disclosed aspects include a dynamic inductance force transducer comprising a variable inductor including an induction coil having a wire configured as a plurality of turns with a hollow center having an inner opening with an inner core within the inner opening. The inner core can move in and out of the opening responsive to an applied pulling force, which changes the inductance of the variable inductor depending on the magnitude of the pulling force. An elastic spring has an end for securing to a fixture and an opposite end secured to a first end of the inner core. The inner core has a second end opposite the first end that has a coupling feature coupled thereto for attaching a load which provides the pulling force.

BRIEF DESCRIPTION OF THE DRAWINGS

FIG. 1A shows an example dynamic inductance force transducer that comprises a variable inductor having an induction coil with a magnetic inner core placed within, according to an example not forming part of the current invention.

FIG. 1B shows an example dynamic inductance force transducer that comprises a variable inductor having an induction coil with a non-magnetic an inner core placed within its inner opening, according to the invention.

FIG. 1C shows the example non-magnetic core in FIG. 1B more clearly showing its terminal electrically coupled through a non-magnetic material to a contactor positioned to electrically contact an inside surface of the wire of the induction coil so that the number of effective turns of the induction coil changes with the pulling force due to movement of the non-magnetic material and thus its contactor, which changes the inductance of the variable inductor.

FIG. 2 is a simplified block diagram showing disclosed frequency generation for force detection. The variable inductor of a disclosed dynamic inductance force transducer has an inductance that varies with the magnitude of the pulling force is coupled to an oscillator circuit portion to provide and oscillator circuit that is configured in a feedback loop.

FIG. 3 is a schematic diagram showing the dynamic inductance force transducer shown in FIG. 1A coupled to a servo gauge which provides the pulling force in a servo gauge application, according to an example embodiment.

FIG. 4 is an example of simulated data showing the sensitivity of a disclosed force transducer with a variable inductor plotting the detected frequency change vs. the force change (in mg), for different inner core displacements (x) from 1 mm to 40 mm, according to an example embodiment.

FIG. 5 is simulated data showing an example of the detection sensitivity for a disclosed dynamic inductance force sensor, which is distinguished by the high sensitivity provided, which is shown to provide a $\Delta F$ of better than 2 mg.

DETAILED DESCRIPTION

Disclosed embodiments are described with reference to the attached figures, wherein like reference numerals are used throughout the figures to designate similar or equivalent elements. The figures are not drawn to scale and they are provided merely to illustrate certain disclosed aspects. Several disclosed aspects are described below with reference to example applications for illustration. It should be understood that numerous specific details, relationships, and methods are set forth to provide a full understanding of the disclosed embodiments.

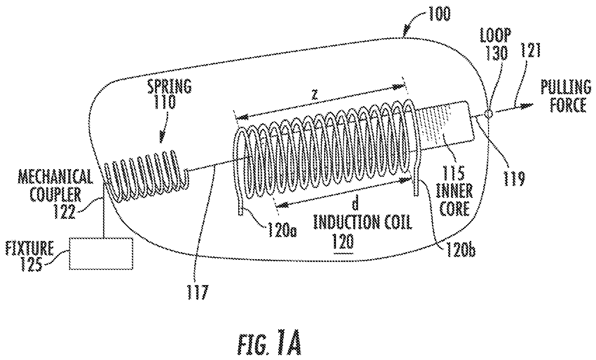

FIG. 1A shows an example dynamic inductance force transducer 100 with a pulling force applied through non-stretchable cords 121 and 119 shown coupled together by a coupling feature 130 shown as being a loop, where cord 119 is attached to one end of the inner core 115. The inner core 115 can move in and out of the opening in the induction coil 120 responsive to an applied pulling force shown as a "pulling force" with an arrow for its direction. In the FIG. 1A embodiment the inner core 115 is a magnetic material that together with an induction coil 120 and elastic spring 110 provides a high sensitivity variable inductor 115/120.

The induction coil 120 comprises a wire configured as a plurality of turns. For example, 20 turns to generally more than 100 turns, for instance 50 to 100 turns, as long as the generated resonant frequency is detectable. The induction coil 120 can comprise materials such as copper, stainless steel, aluminum with a coating such as of a gold-nickel alloy, or other electrically conductive materials that can be formed into coils. The variable inductor 115/120 dynamically changes its inductance depending on a magnitude of the applied pulling force which changes the position of the inner core 115 based on the elasticity of the spring 110 that is coupled to the first end of the inner core 115 which is opposite to its second end which receives the pulling force.

The cords 117, 119 and 121, or pins for 117 and 119, are generally of high strength and can in one particular aspect be less than 0.25 mm (9.84252 mils) in diameter to be suited for a small drum for servo gauge applications that spools cord on its threading groove. For example, comprising stainless steel 316 which is known for robust chemical resistance in oil/gas and petrochemical applications. In some particular applications where even higher strength wire may be needed to minimize the elongation of very long thin wire, Molybdenum and/or Rhenium alloys may be used. The diameter of the cords can also be larger than 0.25 mm of stainless steel 316 in order to reduce the elongation, in this case a larger drum for servo gauge applications is usually needed to make a wider threading groove to wind a thick cord.

The wire of the induction coil 120 can be coated with a higher electrical conductivity layer, such as a metal coating on copper. For example, the conductive coating material can comprise gold-nickel alloy, silver, or nanoparticle based graphene which possesses inert properties to some harsh industrial application environments such as found in oil and gas, and petrochemical refining. Such a coating is generally advantageous because wire resistance causes a resistive loss of energy, where a highly electrically conductive coating will enable less resistive loss and thus more current to flow in the induction coil 120 which provides an increase strength of magnetic field flux, hence a higher efficiency and sensitivity.

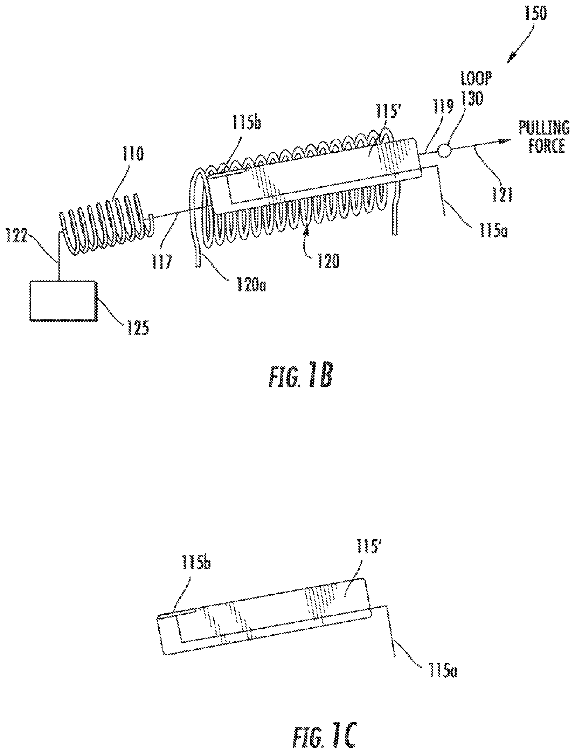

The spring 110 has one of its ends secured to a fixture 125, such as a secured by a mechanical coupler 122 that although shown being wire-like in FIG. 1A can comprise a rivet, with its opposite end attached to the first end of the inner core 115, such as by the cord 117 shown. The inner core 115 can comprise a magnetic material, such as comprising ferrite-nickel zinc, a ceramic magnetic composite material, a non-magnetic base material such as polytetrafluoroethylene (PTFE)/TEFLON coated with magnetic material, or a hybrid magnetic material synthesized using nano technology. A PTFE or another polymer material coated with a magnetic material is generally a good candidate for large temperature variations experienced in some harsh applications. The inner core 115 can also comprise a fully non-magnetic material (no magnetic coating) inner core as shown as 115' in FIG. 1B described below.

FIG. 1B shows an example dynamic inductance force transducer 150 that comprises a variable inductor 115'/120 having an induction coil 120 with a non-magnetic inner core 115' within, according to an example aspect. FIG. 1C shows the example non-magnetic core 115' in FIG. 1B more clearly showing its terminal 115a that electrically couples through the non-magnetic material to a contactor 115b (or a conductive pin) made of durable electrically conductive material (or coatings) positioned to electrically contact an inside surface of the wire of the induction coil 120. Movement of the contactor 115b changes the number of effective turns of the induction coil 120 and thus dynamically its inductance with the pulling force due to movement of the non-magnetic inner core 115'and thus the contactor 115b.

For an inner core comprising a fully non-magnetic material, the inductance variation of the variable inductor 115'/120 will not be notably affected by movement of the inner core 115'. In this embodiment, the turns of the inductor coil 120 are instead a variable being a function of the position of the non-magnetic inner core 115' through movement of the contactor 115b resulting from movement of the non-magnetic inner core 115'. A length of the contactor 115b is generally least 2 turns of the induction coil 120, which is generally at least 20 turns, where spacing between two adjacent turns will generally be equal to or less than the diameter of the wire of the induction coil 120. It is recognized that the hysteresis for the non-magnetic inner core 115' is generally much less being a non-magnetic material as compared to a magnetic material for the inner core.

The spring 110 is a coiled wire spring that functions as an elastic device that enables the force transducer 100 to be a high-precision frequency-force detector. The spring 110 can be a low cost spring that has high robustness, since wire springs with good compression, extension, and torsion can be commercially found as they are already used in a wide variety of other applications, such as portable weight scales and keyboards. Advances in materials and manufacturing technology have improved springs since they were introduced more than a century ago, but the basic principle is the same. In a coiled spring such as spring 110, the entire length of its wire contributes to elasticity because the forces and moments are distributed end-to-end.

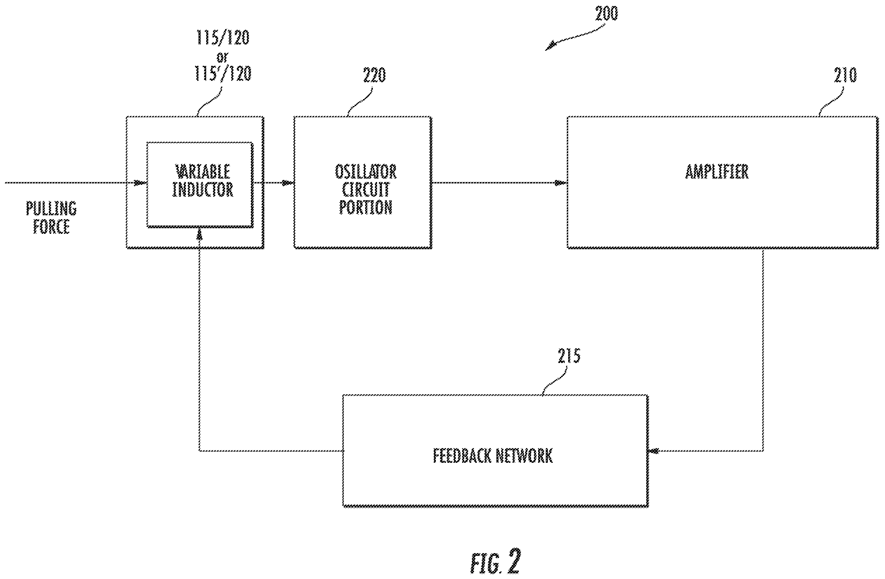

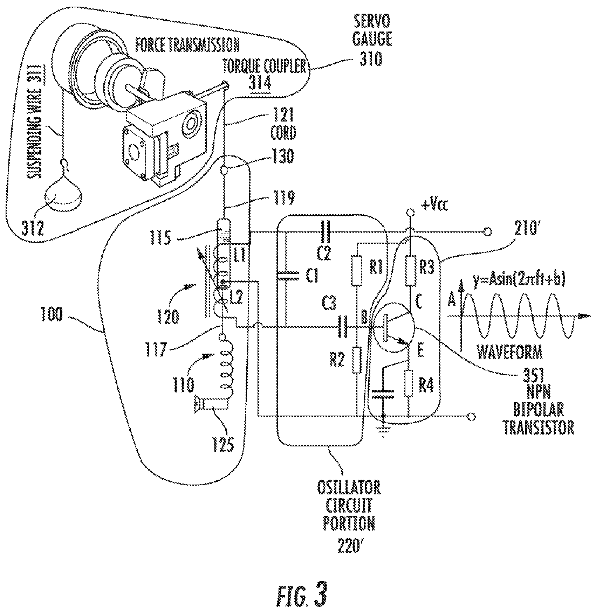

Being able to be made from generally all low cost materials, force transducer 100 is generally manufactured at a low cost. Force transducer 100 is durable having a durability suitable for challenging industrial applications (e.g., having large temperature variations e.g., -40 °C ~ + 85 °C) due to its simplicity and durable components and sturdy interconnection between respective components. When the variable inductor (115/120 or 115'/120) of the force transducer 100 is electrically coupled to nodes within an oscillator circuit or an oscillator circuit portion as described below in FIG. 2 and FIG. 3 where the basic circuit including at least one capacitor is shown as an oscillator circuit portion 220 and 220', a high accuracy force measurement is obtainable from measuring the resonant frequency of the signal (waveform) generated. Thus, the force transducer 100 addresses the challenge of a durable, low cost, high accuracy force measurement for various applications including harsh industrial applications.

Elasticity is a property of a material which allows it to return to its original shape or length after being distorted (stretched or compressed). One example of a suitable material for the spring 110 having high elasticity and tensile strength is music spring wire ASTM A228 (ASTM is an international standards organization). According to Hooke's Law, there is a linear relationship between the force (F) needed to extend a spring and the resultant spring displacement (x), expressed as:

$$(1)\ F_w = k \cdot x$$

Where $k$ is the so-called spring constant.

The inductance of an electronic inductor such as the induction coil 120 comprising a wire coil is determined by the following Equation 2:

$$(2)\ L = N^2 \mu A / Z$$

where the magnetic permeability $\mu = \mu_r \mu_0$, L is the inductance of the coil in Henrys, N is the number of turns in the wire coil, $\mu$ is the permeability of the inner core material, $\mu_r$, is the relative magnetic permeability, $\mu_0$ is the permeability of free space equal to $4\pi \times 10^{-7}$ henry/m, A is the area of the coil in square meters, for a circular cross section A= $\pi r^2$, and z is the average length of the induction coil 120 in meters.

The disclosed movable inner core-based inductor is now described having an inner core comprising a magnetic material that is dragged by an externally applied pulling force applied by a cord 121 coupled to a coupling feature 130 coupled to a cord 119 that is coupled to the inner core 115. The inductance of the variable inductor (115/120) of the force transducer 100 is changed by pulling (or dragging) the inner core 115 out of induction coil 120, so that when the inner core 115 comprises a magnetic material the total inductance ($L_T$) of the variable inductor (115/120) includes an air core inductance portion ($L_{air}$) and a magnetic core inductance portion ($L_{ferrite}$) when a ferrite core.

$$(3)\ L_T = L_{air} + L_{ferrite}$$

From Equations 2 and 3, $L_T$ of the variable inductor (115/120) with its movable ferrite inner core can be expressed as:

$$(4)\ L_T = \mu_0 \pi r^2 n^2 ((\mu_{ferrite} - 1)d + z)$$

$$(5)\quad f_T = 1 / \left\{ 2\pi \sqrt{(L_T C_1)} \right\}$$

Where n is the number of turns of the induction coil 120 per unit length; $N_{Air}$ = n(z-d) is number of turns of the induction coil that is an air core inductor, while $N_{Ferrite}$ = nd is number of turns of the induction coil that is a ferrite core inductor, $L_T$ is total inductance of the variable inductor (115/120) in henry; $\mu_{Ferrite}$, is permeability of ferrite core; z is total length of the induction coil 120 and $d$ is length of the coil occupied by ferrite core, $f_T$ is the resonance frequency, and $C_1$ denotes a fixed capacitance in the oscillator circuit or oscillator circuit portion.

Equation 4 expresses a linear relationship between movable positions (d) of the inner core 115 versus $L_T$. In this way, a variable inductance is created by dragging the inner core 115 out of induction coil 120, while the spring 110 connected to the other end of the inner core 115 which keeps the equilibrium of the magnetic core's position with the dragging force. If the external pulling force becomes zero, the spring 110 is able to precisely restore the inner core 115 to its original position where a zero external force (no pulling force) generally occurs during calibration. The same is true for maximum force that is dragging the inner core 115 out of the induction coil 120, where the maximum position of the inner core 115 is again determined by the spring constant of the spring 110 and the maximum pulling force to be experienced. The pulling force to be experienced is generally configured to not exceed about 95% of the total length of the induction coil 120.

A high-precision frequency oscillator circuit is thus formed by using the variable inductor 115/120 designed and described in FIG. 1A that has a dynamic inductance, and a resonant frequency of the oscillator circuit that can be calculated using Equations 4 and 5, respectively. Once the variable inductor is electrically coupled to nodes of an oscillator circuit or oscillator circuit portion such as 220 or 220', the oscillator circuit provided has a relationship established between resonant frequency of the oscillator circuit and the position of the inner core 115 which changes the inductance of the variable inductor 115/120, so that the applied pulling force can be determined from the resonant frequency or a change in the resonant frequency.

Regarding the sensitivity of the force transducer 100, sensing resolution is recognized to be important to enable distinguishing a small change of a physical parameter of an object under investigation. The higher the resolution, the better the sensing accuracy and sensitivity. As shown in FIG. 3 described below, a change of the pulling force applied to force transducer 100 results in a change in the frequency of a sinusoidal signal output by an oscillator circuit (shown as a waveform) coupled to the force transducer 100 that can be detected by suitable frequency detection circuitry. An analytical expression of sensitivity of detection for force transducer 100 is obtained based on Equations 4 and 5, where the resonant frequency ($f_T$) of the oscillating signal output by the oscillator circuit is as follows:

$$f_T = \frac{1}{2\pi} \left( \mu_0 \pi r^2 n^2 C_1 ((\mu_{ferrite} - 1)d + z) \right)^{-\frac{1}{2}} \qquad (6)$$

Where $C_1$ denotes the fixed capacitance in the oscillator circuit or oscillator circuit portion. Substituting $d$ = z-x into Equation 1, applying differential to Equation 6 with respect to $Fw$, generates Equation 7:

$$\Delta f_T = \frac{\Delta F_w}{4\pi nrk} \left( \mu_0 \pi C_1 ((\mu_{ferrite} - 1)d + z) \right)^{\frac{1}{2}} \cdot ((\mu_{ferrite} - 1)d + z)^{-1} \qquad (7)$$

Where x denotes displacement of inner core with respect to the original position. Hence Equation 7 shows the sensitivity of force detection can be expressed by a relationship between the change in the resonant frequency $\Delta f_T$ and the change in the applied force $\Delta Fw$ in Equation 7. $\Delta F_W$ results in change in the resonant frequency of the sinusoidal signal ($\Delta f_T$) output by the oscillator circuit which can be detected by a suitable frequency detection circuit.

The determining of the magnitude of the pulling force or force change can thus comprise using a force-frequency relation, such as shown above. Alternatively, a more practical method is generally to store the characterization data/table as a look-up table in a non-volatile memory, where a processor does the sensing calculation using a look-up table relating the oscillating frequency to a magnitude of the pulling force or a change in the oscillation frequency to a change in the pulling force.

In a typical application, the induction coil 120 having its inner core being magnetic is physically placed within an oscillator circuit or oscillator circuit portion and is electrically coupled by connecting its respective ends 120a, 120b to nodes in the oscillator circuit or oscillator circuit portion. An LC tank is one example oscillator circuit. More generally, the oscillator circuit or oscillator circuit portion for disclosed embodiments can be any circuit that can take an inductance L into account in its resonant frequency generation, such as typical timer module where oscillator circuit is built inside and connected to outside inputs from L, resistor(s) R, or a capacitor C.

To measure the applied pulling force, one can first measure the present resonant frequency from the signal at the output of an amplifier coupled to the oscillator circuit that has the variable inductor 115/120 or 1157120 coupled thereto without a pulling force applied to the force transducer 100. Subsequently, any other force applied under measurement circumstance can be determined by sensing the force change or coupled thereto with the maximum force at maximum inner core displacement, subsequently any other force applied under measurement circumstance can be determined by sensing the force change. In another way, instead of sensing force changes, the absolute force can also be determined with reference to absolute resonant frequency, by directly measuring the absolute frequency output. The absolute force can be determined by Equation 6 and Equation 1 and its equivalent lookup table. In the above methods of force determination, the force detection sensitivity is expressed by Equation 7.

Being in the oscillator circuit, when a pulling force is applied, the force changes the inductance of the variable inductor 115/120 because as described above the pulling force drags the inner core 115 comprising out of a length of the induction coil 120. For a magnetic core material, the total inductance of the variable inductor 115/120 is thus based on a resulting first length portion with an air core (where the inner core 115 is not present) and a second length portion with the inner core 115 present, which changes total inductance, hence a resonant frequency of the oscillator circuit. An equation can then be used, such as Equation 7 shown above, that relates the change in the frequency of the oscillator circuit and a magnitude of the change in the applied pulling force that enables determining a present magnitude of the pulling force from the resonant frequency that can be measured.

One particular example of applications for disclosed force transducers is for servo gauges (see the servo gauge 310 in FIG. 3 described below). Since the density distribution of crude oil in bulky storage tanks known to be non-homogenous, it is generally stratified with the depth of the oil. Although a known force transducer in combination with a density displacer within the fluid can measure the density of fluid where the displacer is immersed, such application requires high sensitivity and a large dynamic range of the transducer to accurately measure a small overall net force and distinguish subtle changes with high resolution, because the lower the innage (the distance between surface of oil and bottom of oil tank) is measured, the higher the density becomes. Thus, higher density makes higher buoyancy, hence a smaller overall net force.

A small error in density measurement can result in large error in mass, given the huge volume of a bulky tank. For example, bulk storage tanks in tank farms can have diameters up to 80 meters and height of 40 meters, which can store crude oil of 1.2 million barrels = 50 million gallons = 190,000 cubic meters ($m^3$). For Weights and Measures (W&M) applications using level gauges, even if volume of contents is provided accurately by high precision servo level gauge, mass has to generally be determined by density which can vary from 790 kg/$m^3$ to 1000 kg/$m^3$, an error of 0.001% (e.g., 1 kg/$m^3$) can cause large error in mass transactions in about 2 tons of oil, corresponding to revenue loss of US $72,000 (at an oil price of US$ 60/barrel).

Since the density measurement accuracy of available/state-of-the-art servo-gauge-based force transducers is about $\pm$ 3 kg/m3 ($\pm$ 0.19 1b/ft3) and the measuring range is usually confined within apparent weight of 20 g to 265 g, servo-gauges are not often adopted for W&M density measurements in large volumetric tanks. One possible reason is the limits of current force transducers whose sensitivity and dynamic range directly determine the high accuracy of density measurements.

As noted above, the force measurement ranging from 0.01N to 0.5 N still remains quite challenging. A fewer high-sensitive force transducers can measure small force but very expensive and less durable for industrial applications, such as measurement of stratified density distribution of a fluid using a submerged displacer. For a level gauge application using force transducers based on so-called Archimedes principle, the upward force (buoyancy) of a displacer is determined by:

$$F_b = \rho \cdot g \cdot V \qquad (8)$$

Where $V$ is full volume of displacer submerged in liquid of density $p$, $g$ is the gravitational acceleration constant on the geological spot, its nominal value is 9.78033 m/s$^2$. According to Equation 8, to measure the density ($p$) of a fluid accurately, the buoyancy needs to be determined more accurately by measuring the overall force $F_w$ exerted on the wire that is suspending the displacer with a weight $W$ (Equation 9).

$$F_b = W\text{-}F_w \qquad\qquad (9)$$

Given the displacer is being used at a fixed geological location, the only variable that changes with density of fluid is the force, $F_w$, i.e.,

$$\rho = \frac{W\text{-}F_w}{gV} = \frac{(W\text{-}F_w)/g}{V} \qquad\qquad (10)$$

Let $W_m$ and $F_{wm}$ denote $W/g$ and $F_W/g$ mass term in kilograms, then Equation 10 becomes:

$$\rho = \frac{W_m\text{-}F_{wm}}{V} \quad [\text{kg/m}^3] \qquad\qquad (11)$$

In order to understand the sensitivity requirements of a force transducer, applying derivative to Equation 11 with respect to full immersion depth,

$$\frac{d\rho}{dl} = -\frac{dF_{wm}}{Vdl} \qquad\qquad (12)$$

Thus,

$$\Delta F_{wm} = -V\Delta\rho \quad [\text{kg}] \qquad\qquad (13)$$

For a crude oil tank with 1.2 million barrels, the measuring density accuracy should be at least 100 times better than provided by current state of the art force sensors, so that the revenue loss can be reduced by 100 times, e.g., to about US $1,200 per full tank. Therefore, measured density accuracy to meet this requirement should be:

$$\Delta\rho \le 0.01 \text{ kg/m}^3 = 0.00001 \text{ [g/cm}^3] \quad (14)$$

According to Equation 13, then sensitivity of the force transducer should be:

$$\Delta F_{wm} \le 0.00001V \text{ [g]} \qquad\qquad (15)$$

Where V denotes immersed volume of density displacer usually not larger than 300 cm$^3$, typical about 200 cm$^3$. To meet the requirement of density accuracy of 0.01 g/ m$^3$, the sensitivity of force measurements should be:

$$\Delta F_{wm} \le 0.002 \text{ [g]} \qquad\qquad (16)$$

This is a challenge for all known industrial force transducers to accurately measure small change of force that is less than 2 mg that as described below based on simulation data disclosed force transducers can provide.

The implementation of a disclosed force transducer can be a low cost yet robust implementation to meet high sensitivity force measurement needs of a variety of applications. FIG. 2 is a simplified block diagram showing a disclosed frequency generation system 200 for force detection. The variable inductor 115/120 or 115'/120 of a disclosed dynamic inductance force transducer that has an inductance that varies with the magnitude of the pulling force is electrically coupled to an oscillator circuit portion 220 to form the oscillator circuit that is configured in a feedback loop. The output of the oscillator circuit is generally a sinusoid signal at a resonant frequency which reflects the present inductance of the variable inductor. In its application. The output of the oscillator circuit is coupled to frequency detection circuitry, and the frequency or change in frequency of the oscillator circuit is processed by a processor implementing an equation or utilizing a look-up table that converts the frequency or change in frequency into a force or into a change in force. Although not shown in FIG. 2, the output of the oscillator circuit can also be taken after amplification, which in FIG. 3 would be taken after signal amplification provided by the amplifier 210'.

For a discrete oscillator circuit, the oscillator circuit has at least one fixed capacitor. The oscillator circuit can also comprise an oscillator integrated circuit (IC), where the variable inductor 120 can be coupled to an input of an oscillator IC (an input pin) that can detect the resulting resonant frequency change when the variable inductance is changed by a pulling force. The feedback loop includes an amplifier 210 and a feedback network 215 that provides the needed feedback to sustain the oscillations at the induced resonant frequency that is based on the inductance of the variable inductor.

FIG. 3 is a schematic diagram showing the dynamic inductance force transducer 100 shown in FIG. 1A coupled to receive a pulling force from a servo gauge 310 by a cord 121 that is non-stretchable, where the pulling force is originated by a displacer 312 which can partly or fully be submerged in liquid on a suspending wire 311 which is coupled to a torque coupler 314 in a servo gauge application. The circuitry in FIG. 3 corresponds to just one example of implementation of the block diagram of the frequency generation system 200 shown in FIG. 2.

The dark dot shown in FIG. 3 coupled along the length of the induction coil 120 is connected to the ground of the system which provides a phase reversal (180 degrees) relative to the signal at the C terminal of the NPN bipolar transistor 351 of the amplifier 210' so that the amplified signal provides positive feedback to the variable inductor 115/120 or 115'/120 with 220' to maintain a continuous and stable oscillation signal waveform output. The NPN bipolar transistor 351 configured in a common emitter amplifier configuration. The R's shown are resistors, and the C's shown are capacitors. In this common emitter circuit as known in electronics the base terminal (shown as B) of the bipolar transistor serves as the input, the collector (shown as C) is the output, and the emitter (shown as E) is common to both (for example, and may be tied to ground reference or a power supply rail), and the voltage gain depends almost exclusively on the ratio of the resistor R in the collector leg to the resistor R in the emitter leg. The common-emitter amplifier has the amplifier an inverted output (at terminal C) relative to the input signal (at terminal B), and can have a voltage gain.

Regarding where along the length of the induction coil 120 to connect the system ground to, a typical value is 25% to 30% of the total induction coil length, but it can also be another ratio number depending on the design requirements and the transistor performance. In this configuration as noted above, the phase of the feedback signal received by the induction coil 120 is reversed by 180 degrees so that this output signal is positively maintained.

The arrangement in FIG. 3 as described above having the oscillator output coupled to frequency detection circuitry and a processor processing the frequency information to provide a force value can enable an accurately measurement for the density of a liquid in bulk storage tanks according to Equation 11 so that error in mass calculation for W&M becomes fairly small. Moreover, because of the precision of the spring coil 110, this arrangement also has very precise repeatability to support calibration or high-precision applications.

Sensing resolution is an important capability of a sensor that can distinguish a small change of physical parameter of an object under investigation. The higher the resolution, the better the sensing accuracy and sensitivity. As shown in FIG. 3, the sinusoidal signal output (shown as a waveform) of the oscillator circuit can be frequency detected, and a change of frequency of the sinusoidal signal can be related to a change of force using Equation 7 above, so that the sensitivity of detection can be expressed by a relationship of $\Delta f_T$ and $\Delta F_W$.

The methods and devices disclosed herein can be implemented by using ordinary commercially available components. The coiled wire for spring 110 has a high durability and robustness and is generally able to cope with millions of times of force changes and movements. Although the force transducer for servo gauge application is just an example application, it can improve the state-of-the-art servo gauge measuring accuracy density which has been around $\pm$ 3 kg/m$^3$ ($\pm$ 0.19 lb/ft$^3$) that is challenge for fairly accurate fiscal mass-based transactions in W&M. Furthermore, disclosed force transducers can measure a small force which makes it possible to use larger volume of displacer to provide more reliable volumetric data under fluctuation of fluid, even though larger volume creates greater buoyancy that will reduce the overall force $F_W$ exerted on the cord 119. The restriction on the selection of a displacer 312 may also be alleviated to large degree, since they can cope with small and large variation of densities throughout entire contents of bulky storage tanks.

Disclosed methods and devices can also be used for other industrial and/or commercial applications where high force sensitivity and accuracy and large dynamic range are all needed. Disclosed force transducers are expected to fill in the gap where high sensitivity is required to distinguish a subtle change of the force under harsh industrial conditions.

Disclosed force transducers are flexible to implement for various sensitivity requirements at low cost, because the inner core displacement is determined by the spring constant of the spring 110 enabling the external pulling force to be measured. The wire springs for spring 110 can be chosen so that the displacement at corresponding frequency change can provide easy detection of small force changes.

Also the range of oscillating frequencies can be selected by selection of a variety of frequency generation system components which can be used for tuning the resonant frequency, such as having different capacitance component value(s) in the oscillator circuit to avoid possible electromagnetic interferences (EMI) to occur in the same frequency range. Other resonant frequency tuning parameters include the spring constant of the spring 110, the pulling force (e.g., by selecting the weight of the displacer 312), the total length of induction coil 120, the diameter of induction coil 120, the number of turns of the induction coil 120, and the relative permeability of inner core 115. Any of these parameters can provide flexibility and design freedom to set a resonant frequency to meet the frequency needs for a variety of applications.

Disclosed aspects have several significant advantages. In combination of linear or nonlinear movement of the inner core 115 or non-magnetic inner core 115', essentially the exact detected frequency (from the overall inductance) should be accurately repeated under the same overall force, meaning from increase to decrease, and vice versa. The requirements of high sensitivity of the force transducer demands solution to mechanical hysteresis in the cord 121, which is described above may comprise stainless steel 316 for robust chemical resistance. In some particular applications as noted above higher strength wire may be required to minimize the elongation of long thin wire such as by using Molybdenum and/or Rhenium alloys, and the spring 110 can be made of a high elastic material such as ASTM A228.

Hysteresis of the inner core 115 material can impact the inductance when a magnetic material affects permeability of the combined induction coils, consequently the accuracy of measurements. To address this problem, the total flux density will generally not reach the saturation levels of core magnetic material, or as an alternative a non-magnetic material for the inner core can be used (see FIG. 1B described above).

To increase detection sensitivity, disclosed force transducers benefit from an extra spring coil that can confine the magnetic field distribution from disturbances so that the stability of the magnetic induction is retained, hence the sensitivity. Since the two ends of the spring 110 are not electrically connected to induction coil 120 or terminal 115a, the influence of its self-inductance can be negligible, so that mutual inductance in the overall inductance is minimally contributed by the spring 110, which is primarily used to provide coupling to wiring and the load with a high repeatability. The shape of the induction coil 120 also strengthens the magnetic field that is created. To figure out the exact effective mutual inductance values would be different in theory, but can be easily measured in practice, the length of spring 110 change provides an additional attribute to change of inductance due to displacement of the inner core, since the spring 110 is aligned with induction coil 120 on the axial direction, although it is not significant. More importantly the change of the inductance will be mainly determined by displacement of the core material.

Known variable inductors use strong magnetic core materials and large coil cross sections, and more turns to increase the sensitivity. In disclosed force transducers, in contrast, the induction coil 120 generally has a relatively small cross section dimension, such as a radius of 2 or 4 mms.

Disclosed force transducers and related sensing methods thus address the challenges of requirements of high dynamic range force transducers, by accurately detecting small and large forces with subtle force changes. Applications that require high sensitivity on the order of parts per million (ppm), while the absolute force can range from a few grams to hundreds or thousands of grams depending on the strength and elasticity of the spring 110, with servo gauging with a displacer 312 being is just one of the possible applications for disclosed force transducers.

EXAMPLES

Disclosed embodiments are further illustrated by the following specific Examples, which should not be construed as limiting the scope or content of this Disclosure in any way.

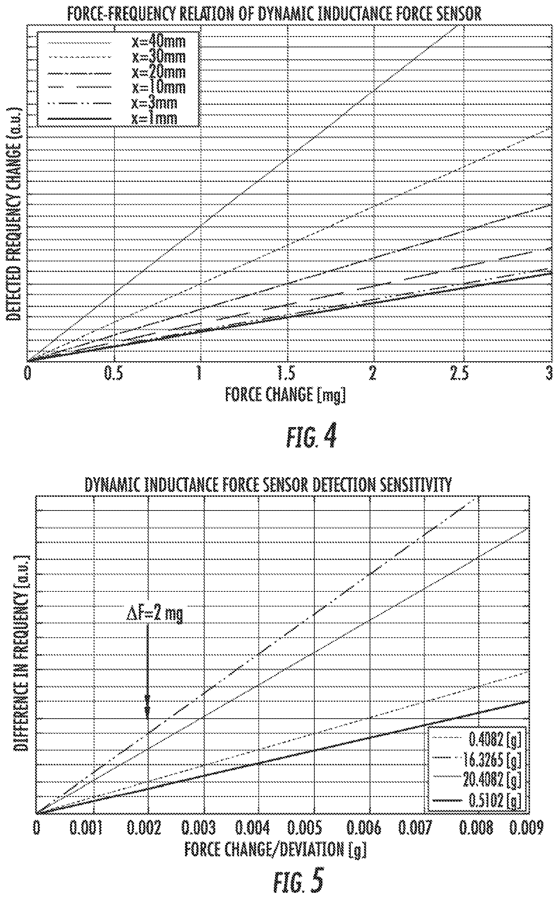

As described above, given the pulling force, displacement x of the inner core will depend on elastic spring constant of the spring 110, while output frequency range can be predetermined by the capacitance in the oscillator circuit and the range of dynamic inductance of the variable inductor. A design simulation was performed on a force sensing system using an induction coil 120 comprising wire-wound copper coils 4 mm in diameter with 25 turns for the data in both FIGs. 4 and 5. The inner core 115 comprised ferrite, where inner core had a length of 60 mm, and the length of the induction coil 120 was 80 mm. The spring comprised music spring wire ASTM A228.

FIG. 4 shows simulated data showing the sensitivity of a disclosed force transducer with a variable frequency output plotting the detected frequency change vs. the force change (in mg), for different inner core displacements (x) from 1 mm to 40 mm. When the ferrite inner core was dragged by a pulling force and was moved out of the induction coil from 1 mm to 40 mm. The y-axis labeled frequency changes for different spring constants which results in different displacements for the same force.

FIG. 5 is simulated data showing an example of the detection sensitivity for a disclosed dynamic inductance force sensor, which is distinguished by the high sensitivity provided, which is shown to provide a $\Delta F$ of better than 2 mg. The detection sensitivity of 2 mg of force change that can be detected by a disclosed force transducer by a frequency change is generally essential for W&M applications. The force change in the servo gauge (sensed as a frequency change) as known in the art of servo gauges can be used to infer change of density and/or absolute density of fluid where a displacer is immersed therein. This can create accurate density profile in a tank.

While various disclosed embodiments have been described above, it should be understood that they have been presented by way of example only, and not limitation. Numerous changes to the subject matter disclosed herein can be made in accordance with this Disclosure without departing from the scope of the invention, defined by the appended claims. n addition, while a particular feature may have been disclosed with respect to only one of several implementations, such feature may be combined with one or more other features of the other implementations as may be desired and advantageous for any given or particular application.

**Claims**

1. A method of force measurement, comprising:

   providing a dynamic inductance force transducer (100) comprising a variable inductor including an induction coil (120) having a wire configured as a plurality of turns with a hollow center having an inner opening that an inner core (115') within can move in and out responsive to an applied pulling force to change its inductance depending on a magnitude of said pulling force, said force transducer including a spring (110) having an end secured to a fixture (125) and an opposite end secured to a first end of said inner core that has a second end opposite said first end having a coupling feature (130) coupled thereto for attaching a load which provides said pulling force, **characterized in that** said inner core comprises a non-magnetic material that has a termina (115a) electrically coupled through said non-magnetic material to a contactor (115b) of the inner core positioned to electrically contact an inside surface of said wire of said induction coil so that said number of effective ones of said turns of said inductor coil changes with said pulling force due to movement of said contactor (115b), which changes said inductance of said variable inductor;
   attaching said load to said coupling feature;
   connecting terminals of said variable inductor to first and second nodes of an oscillator circuit portion (220 or 220') to provide an oscillator circuit;
   measuring a signal at an output of said oscillator circuit to determine an oscillation frequency or a change in said oscillation frequency, wherein said pulling force from said load changes said inductance of said variable inductor which changes said oscillation frequency of said oscillator circuit, and
   determining a magnitude of said pulling force from said oscillation frequency or a pulling force change from said frequency change.

2. The method of claim 1, wherein said wire of said induction coil is coated with a higher electrical conductivity layer.

3. The method of claim 1, wherein said determining said magnitude of said pulling force comprises using a force-frequency relation in a form of stored data or an equation relating said oscillating frequency to a magnitude of said pulling force or a change in said oscillation frequency to a change in said pulling force.

4. The method of claim 1, wherein said providing further comprises providing a servo gauge (310) including a displacer (312) within a tank having a liquid that is on a suspending wire (311) which is coupled by at least one non-stretchable high strength cord (117, 119, 121) to said coupling feature to provide said load.

5. A variable inductance force transducer (150), comprising:

   a variable inductor including an induction coil (120) having a wire configured as a plurality of turns with a hollow center having an inner opening that an inner core (115') placed within can move in and out responsive to an applied pulling force to change its inductance depending on a magnitude of a pulling force applied to said inner core;
   a spring (110) having one end for securing to a fixture (125) and an opposite end secured to a first end of said inner core, and
   a coupling feature (130) coupled to a second end of said inner core opposite said first end for attaching a load which provides said pulling force,
   **characterized in that** said inner core comprises a non-magnetic material that has a termina (115a) electrically coupled through said non-magnetic material to a contactor (115b) of the inner core positioned to electrically contact an inside surface of said wire of the induction coil so that said number of effective ones of said turns of said inductor coil changes with said pulling force due to movement of said terminal, which changes said inductance of said variable inductor.

6. The force transducer of claim 5, further comprising an oscillator circuit portion (220 or 220') connected in a feedback loop including an amplifier (210) coupled to said induction coil,

   wherein terminals (115) of said variable inductor are connected to nodes in said oscillator circuit portion to form oscillator;
   wherein an output of said oscillator circuit provides a signal at a specific oscillation frequency that changes when said pulling force moves said inner core which changes said inductance of said variable inductor.

7. The force transducer of claim 6, further comprising a processor for signal processing said waveform for determining a magnitude of said pulling force from said oscillation frequency or a pulling force change from a change in said oscillation frequency relating said oscillating frequency to a magnitude of said pulling force or a change in said oscillation frequency to a change in said pulling force.

8. The force transducer of claim 5, wherein said wire of said induction coil is coated with a higher electrical conductivity layer.

9. The force transducer of claim 5, further comprising a computing system for determining a magnitude of said pulling force by using a stored force-frequency relation or an equation relating said oscillating frequency to a magnitude of said pulling force or a change in said oscillation frequency to a change in said pulling force.

**Patentansprüche**

1. Verfahren zur Kraftmessung, umfassend:

   Bereitstellen eines dynamischen Induktionskraftaufnehmers (100), der einen variablen Induktor umfasst, der eine Induktionsspule (120) einschließt, die einen Draht aufweist, der als eine Vielzahl von Windungen mit einem hohlen Zentrum konfiguriert ist, das eine innere Öffnung aufweist, damit sich innerhalb ein innerer Kern (115') als Reaktion auf eine aufgebrachte Zugkraft hinein- und herausbewegen kann, um seine Induktivität in Abhängigkeit von einer Größe der Zugkraft zu ändern, wobei der Kraftaufnehmer eine Feder (110) einschließt, die ein Ende aufweist, das an einer Halterung (125) befestigt ist, und ein gegenüberliegendes Ende, das an einem ersten Ende des inneren Kerns befestigt ist, der ein zweites, dem ersten Ende gegenüberliegendes Ende aufweist, woran ein Kopplungsmerkmal (130) gekoppelt ist, um eine Last zu befestigen, die die Zugkraft bereitstellt, **dadurch gekennzeichnet, dass** der innere Kern ein nicht magnetisches Material umfasst, das einen Anschluss (115a) aufweist, der durch das nicht magnetische Material mit einem Kontaktgeber (115b) des inneren Kerns elektrisch gekoppelt ist, der so positioniert ist, dass er eine Innenfläche des Drahts der Induktionsspule elektrisch kontaktiert, sodass sich die Anzahl der effektiven Windungen der Induktionsspule mit der Zugkraft aufgrund der Bewegung des Kontaktgebers (115b) ändert, wodurch sich die Induktivität des variablen Induktors ändert;
   Befestigen der Last an dem Kopplungselement;
   Befestigen von Anschlüssen des variablen Induktors an einem ersten und zweiten Knoten eines Oszillatorschaltungsabschnitts (220 oder 220'), um eine Oszillatorschaltung bereitzustellen;
   Messen eines Signals an einem Ausgang der Oszillatorschaltung, um eine Oszillationsfrequenz oder eine Änderung der Oszillationsfrequenz zu bestimmen, wobei die Zugkraft von der Last die Induktivität des variablen Induktors ändert, was die Oszillationsfrequenz der Oszillatorschaltung ändert, und
   Bestimmen einer Größe der Zugkraft aus der Oszillationsfrequenz oder einer Zugkraftänderung aus der Frequenzänderung.

2. Verfahren nach Anspruch 1, wobei der Draht der Induktionsspule mit einer Schicht höherer elektrischer Leitfähigkeit überzogen ist.

3. Verfahren nach Anspruch 1, wobei das Bestimmen der Größe der Zugkraft umfasst
   Verwenden einer Kraft-Frequenz-Beziehung in Form von gespeicherten Daten oder einer Gleichung, die die Oszillationsfrequenz zu einer Größe der Zugkraft oder eine Änderung der Oszillationsfrequenz zu einer Änderung der Zugkraft in Beziehung setzt.

4. Verfahren nach Anspruch 1, wobei das Bereitstellen ferner das Bereitstellen eines Servo-Messinstruments (310) umfasst, das einen Verdränger (312) innerhalb eines Tanks einschließt, der eine Flüssigkeit aufweist, der sich an einem Aufhängungsdraht (311) befindet, der durch mindestens ein nicht dehnbares, hochfestes Seil (117, 119, 121) mit dem Kopplungsmerkmal verbunden ist, um die Last bereitzustellen.

5. Kraftaufnehmer (150) mit variabler Induktivität, umfassend:

einen variablen Induktor, der eine Induktionsspule (120) einschließt, die einen Draht aufweist, der als eine Vielzahl von Windungen mit einem hohlen Zentrum konfiguriert ist, das eine innere Öffnung aufweist, damit sich ein innerhalb platzierter innerer Kern (115') als Reaktion auf eine aufgebrachte Zugkraft hinein- und herausbewegen kann, um seine Induktivität in Abhängigkeit von einer Größe einer Zugkraft zu ändern, die auf den inneren Kern aufgebracht wird;
eine Feder (110), die ein Ende zum Befestigen an einer Halterung (125) und ein gegenüberliegendes Ende aufweist, das an einem ersten Ende des inneren Kerns befestigt ist, und
ein Kopplungsmerkmal (130), das mit einem zweiten Ende des inneren Kerns gegenüber dem ersten Ende gekoppelt ist, um eine Last zu befestigen, die die Zugkraft bereitstellt,
**dadurch gekennzeichnet, dass**
der innere Kern ein nicht magnetisches Material umfasst, das einen Anschluss (115a) aufweist, der über das nicht magnetische Material mit einem Kontaktgeber (115b) des inneren Kerns elektrisch gekoppelt ist, der so positioniert ist, dass er eine Innenfläche des Drahts der Induktionsspule elektrisch kontaktiert, sodass sich die Anzahl der effektiven Windungen der Induktionsspule mit der Zugkraft aufgrund der Bewegung des Anschlusses ändert, wodurch sich die Induktivität des variablen Induktors ändert.

6. Kraftaufnehmer nach Anspruch 5, der ferner einen Oszillatorschaltungsabschnitt (220 oder 220') umfasst, der in einer Rückkopplungsschleife verbunden ist, die einen Verstärker (210) einschließt, der mit der Induktionsspule gekoppelt ist,

wobei Anschlüsse (115) des variablen Induktors mit Knoten in dem Oszillatorschaltungsabschnitt verbunden sind, um einen Oszillator zu bilden;
wobei ein Ausgang der Oszillatorschaltung ein Signal mit einer bestimmten Oszillationsfrequenz bereitstellt, die sich ändert, wenn die Zugkraft den inneren Kern bewegt, wodurch sich die Induktivität des variablen Induktors ändert.

7. Kraftaufnehmer nach Anspruch 6, der ferner einen Prozessor zur Signalverarbeitung der Wellenform umfasst, um eine Größe der Zugkraft aus der Oszillationsfrequenz oder eine Zugkraftänderung aus einer Änderung der Oszillationsfrequenz zu bestimmen, die die Oszillationsfrequenz mit einer Größe der Zugkraft oder eine Änderung der Oszillationsfrequenz mit einer Änderung der Zugkraft in Beziehung setzt.

8. Kraftaufnehmer nach Anspruch 5, wobei der Draht der Induktionsspule mit einer Schicht höherer elektrischer Leitfähigkeit überzogen ist.

9. Kraftaufnehmer nach Anspruch 5, der ferner ein Rechensystem zum Bestimmen einer Größe der Zugkraft unter Verwendung einer gespeicherten Kraft-Frequenz-Beziehung oder einer Gleichung umfasst, die die Oszillationsfrequenz mit einer Größe der Zugkraft oder eine Änderung der Oszillationsfrequenz mit einer Änderung der Zugkraft in Beziehung setzt.

**Revendications**

1. Procédé de mesure de force, comprenant :

la fourniture d'un transducteur de force à inductance dynamique (100) comprenant un inducteur variable incluant une bobine d'induction (120) ayant un fil configuré sous forme d'une pluralité de spires avec un centre creux ayant une ouverture interne de sorte qu'un noyau interne (115') à l'intérieur peut entrer et sortir en réponse à une force de traction appliquée pour changer son inductance en fonction d'une amplitude de ladite force de traction, ledit transducteur de force incluant un ressort (110) ayant une extrémité fixée à un dispositif de fixation (125) et une extrémité opposée fixée à une première extrémité dudit noyau interne qui a une seconde extrémité opposée à ladite première extrémité à laquelle est couplé un élément de couplage (130) pour attacher une charge qui fournit ladite force de traction, **caractérisé en ce que** ledit noyau interne comprend un matériau non magnétique qui a une borne (115a) couplée électriquement via ledit matériau non magnétique à un contacteur (115b) du noyau interne positionné pour entrer en contact électrique avec une surface intérieure dudit fil de ladite bobine d'induction de sorte que ledit nombre de spires efficaces parmi lesdites spires de ladite bobine d'induction change avec ladite force de traction en raison du mouvement dudit contacteur (115b), ce qui change ladite inductance dudit inducteur variable ;

l'attachement de ladite charge audit élément de couplage ;

la connexion des bornes dudit inducteur variable aux premier et second noeuds d'une partie de circuit oscillateur (220 ou 220') pour fournir un circuit oscillateur ;

la mesure d'un signal à une sortie dudit circuit oscillateur pour déterminer une fréquence d'oscillation ou un changement dans ladite fréquence d'oscillation, dans lequel ladite force de traction provenant de ladite charge change ladite inductance dudit inducteur variable qui change ladite fréquence d'oscillation dudit circuit oscillateur, et

la détermination d'une amplitude de ladite force de traction à partir de ladite fréquence d'oscillation ou d'un changement de force de traction à partir dudit changement de fréquence.

2. Procédé selon la revendication 1, dans lequel ledit fil de ladite bobine d'induction est recouvert d'une couche de conductivité électrique supérieure.

3. Procédé selon la revendication 1, dans lequel ladite détermination de ladite amplitude de ladite force de traction comprend

l'utilisation d'une relation force-fréquence sous forme de données stockées ou d'une équation reliant ladite fréquence d'oscillation à une amplitude de ladite force de traction ou un changement de ladite fréquence d'oscillation à un changement de ladite force de traction.

4. Procédé selon la revendication 1, dans lequel ladite fourniture comprend en outre la fourniture d'une jauge asservie (310) incluant un palpeur (312) à l'intérieur d'un réservoir comportant un liquide qui se trouve sur un fil de suspension (311) qui est couplé par au moins un cordon haute résistance non extensible (117, 119, 121) audit élément de couplage pour fournir ladite charge.

5. Transducteur de force à inductance variable (150), comprenant :

un inducteur variable incluant une bobine d'induction (120) ayant un fil configuré sous forme d'une pluralité de spires avec un centre creux ayant une ouverture interne de sorte qu'un noyau interne (115') placé à l'intérieur peut entrer et sortir en réponse à une force de traction appliquée pour changer son inductance en fonction d'une amplitude d'une force de traction appliquée audit noyau interne ;

un ressort (110) ayant une extrémité destinée à être fixée à un dispositif de fixation (125) et une extrémité opposée fixée à une première extrémité dudit noyau interne, et

un élément de couplage (130) couplé à une seconde extrémité dudit noyau interne opposée à ladite première extrémité pour attacher une charge qui fournit ladite force de traction,

**caractérisé en ce que**

ledit noyau interne comprend un matériau non magnétique qui a une borne (115a) couplée électriquement via ledit matériau non magnétique à un contacteur (115b) du noyau interne positionné pour entrer en contact électrique avec une surface intérieure dudit fil de la bobine d'induction de sorte que ledit nombre de spires efficaces parmi lesdites spires de ladite bobine d'induction change avec ladite force de traction en raison du mouvement de ladite borne, ce qui change ladite inductance dudit inducteur variable.

6. Transducteur de force selon la revendication 5, comprenant en outre une partie de circuit oscillateur (220 ou 220') connectée dans une boucle de rétroaction incluant un amplificateur (210) couplé à ladite bobine d'induction,

dans lequel les bornes (115) dudit inducteur variable sont connectées à des noeuds dans ladite partie de circuit oscillateur pour former un oscillateur ;

dans lequel une sortie dudit circuit oscillateur fournit un signal à une fréquence d'oscillation spécifique qui change lorsque ladite force de traction déplace ledit noyau interne, ce qui change ladite inductance dudit inducteur variable.

7. Transducteur de force selon la revendication 6, comprenant en outre un processeur pour le traitement de signaux de ladite forme d'onde pour déterminer une amplitude de ladite force de traction à partir de ladite fréquence d'oscillation ou un changement de force de traction à partir d'un changement dans ladite fréquence d'oscillation reliant ladite fréquence d'oscillation à une amplitude de ladite force de traction ou un changement dans ladite fréquence d'oscillation à un changement dans ladite force de traction.

8. Transducteur de force selon la revendication 5, dans lequel ledit fil de ladite bobine d'induction est recouvert d'une couche de conductivité électrique supérieure.

9. Transducteur de force selon la revendication 5, comprenant en outre un système informatique pour déterminer une amplitude de ladite force de traction en utilisant une relation force-fréquence stockée ou une équation reliant ladite fréquence d'oscillation à une amplitude de ladite force de traction ou un changement dans ladite fréquence d'oscillation à un changement dans ladite force de traction.

FIG. 1A

FIG. 1B

FIG. 1C

FIG. 2

EP 3 803 306 B1

EP 3 803 306 B1

FIG. 3

18

FIG. 4

FIG. 5

**REFERENCES CITED IN THE DESCRIPTION**

**Patent documents cited in the description**

- US 3782188 A

- GB 1015118 A

**Non-patent literature cited in the description**

- Inductive force transducers. **DAN MIHAI STEFA-NESCU.** Handbook of force transcucers. Springer, 01 January 2011, 73-86